# EUROPÄISCHE PATENTANMELDUNG

(11) **EP 0 936 240 A2**
(43) Veröffentlichungstag der Anmeldung: **18.08.1999**
(21) Anmeldenummer: 99100239.5
(22) Anmeldetag: 08.01.1999
(51) Int. Cl.: C08J 9/12, C08J 9/14, C08J 9/00, C08L 75/04

(54) **Verfahren zur Herstellung von Hartschaumstoffen auf Isocyanatbasis**

(30) Priorität: 13.02.1998 DE 19805879
(71) Anmelder: BASF AKTIENGESELLSCHAFT, 67056 Ludwigshafen (DE)
(72) Erfinder: Baum, Eva, 01987 Schwarzheide (DE); Rotermund, Udo Dr., 01990 Ortrand (DE); Reichelt, Michael, 01945 Ruhland (DE); Jung, Ludwig, 82291 Mammendorf (DE)

(57) **Zusammenfassung**

Die Erfindung betrifft ein Verfahren zur Herstellung von Hartschaumstoffen auf Isocyanatbasis durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Kohlendioxid als alleiniges oder zusätzliches Treibmittel,
e) Schaumstabilisatoren,
f) Katalysatoren sowie gegebenenfalls
g) weiteren Hilfsmitteln und/oder Zusatzstoffen,
das dadurch gekennzeichnet ist, daß als Schaumstabilisator mindestens eine siliziumorganische Verbindung mit einem relativen Gewichtsverhältnis Ethylenoxid/Propylenoxid von über 70/30 eingesetzt wird, wobei der Gesamt-Si-Gehalt größer oder gleich 5 Gew.-%, bezogen auf das Gewicht des bzw. der eingesetzten Schaumstabilisatoren, beträgt, sowie die Verwendung der so hergestellten Hartschaumstoffe auf Isocyanatbasis als Isolier- und Dämmaterial.

## Beschreibung

Die Erfindung betrifft ein verfahren zur Herstellung von Hartschaumstoffen auf Isocyanatbasis, bei dem als alleiniges oder zusätzliches Treibmittel Kohlendioxid und als Schaumstabilisator mindestens eine siliziumorganische Verbindung eingesetzt werden, sowie die Verwendung dieser Hartschaumstoffe als Isolier- und Dämmaterial.

Hartschaumstoffe auf Isocyanatbasis, insbesondere Polyurethan (PUR)- und Isocyanuratschaumstoffe, sind seit langem bekannt und werden vorwiegend zur Wärme- oder Kälteisolation, z.B. in Kühlgeräten, im Bauwesen, in Warmwasserspeichern und Fernwärmerohren, benutzt. Eine zusammenfassende Übersicht über die Herstellung von solchen Schaumstoffen wird beispielsweise im Kunststoff-Handbuch, Band VII, "Polyurethane", 1. Auflage 1966, herausgegeben von Dr. R. Vieweg und Dr. A. Höchtlen, und 2. Auflage, 1983, sowie 3. Auflage, 1993, herausgegeben von Dr. G. Oertel, (Carl Hanser Verlag, München) gegeben.

Das Schäumen von PUR-Schaumstoffen mit CO₂ -Zusatz kann nach dem Gasbeladungsverfahren oder nach dem Flüssig-Dosierverfahren erfolgen. Es gibt bereits verschiedene Maschinenhersteller, die solche Dosieraggregate anbieten. Auch bei Hartschaumsystemen können diese Verfahren angewendet werden, jedoch mit dem Nachteil, daß mit zunehmender CO₂-Zusatzmenge die Zellstruktur gestört wird. Die Zellendurchmesser werden größer und ungleichmäßiger. Durch den Froth-Effekt entstehen grobe Lunker. Mit der Vergrößerung der Zellen und durch Lunkerstruktur gehen dann auch die guten Isoliereigenschaften verloren.

Durch konstruktionelle Veränderungen versuchen gegenwärtig die Maschinenhersteller, diese Mängel zu beheben, indem eine neue Mischkopfgeneration oder verschiedene Techniken für die Zuführung des CO₂ entwickelt werden (z.B. 18. Schaumkunststoff -Tagung 1997 (Polyurethan-Formteile grenzenlos innovativ), Wiesbaden, R. Apenburg u. a. / Cannon-Group "Polyurethan mit Flüssig-CO₂ schäumen", Seiten 213-241).

Der andere Weg, die CO₂ -Verträglichkeit und den Beladungsgrad der Rohstoffkomponente zu verbessern, steht den Rohstoffherstellern zur Aufgabe.

In der Fachzeitschrift "Plastics Technology" 09/1996, Seiten 29-35 (Sherman L.M. "Surfactants & Catalysts Are Matched To Ozone-Friendly Urethane Foams") werden die Rohstoffeinflüsse auf das Schäumen von PUR-Weichschaum mit Flüssig-CO₂ diskutiert. Dabei wird festgestellt, daß nicht die Stabilisatorauswahl, sondern eine entsprechende Maschinentechnik des CO₂ -Schäumprozesses zu guten Ergebnissen führt. Traditionelle Stabilisatoren seien völlig geeignet.

Im Vortrag zu Utech 96 (Noakes C.W. / Dow Europe S.A. und Casagrande G. / Dow Italia S.p.A. "Liquid CO₂ Blown Foam For Automotive Flexible Moulding") werden verschiedene Weichschaumformulierungen mit Silikonstabilisatoren dargestellt, ohne diese und ihre Effekte zu beschreiben.

WO 97/10277 beschreibt den Einsatz von verschiedenen Stabilisatoren. Dabei wird festgestellt, daß zur Herstellung von mit inerten Gasen geschäumten PUR-Blockweichschäumen Stabilisatoren mit einem Alkylenoxidgehalt von kleiner 37 Gew.-% verwendet werden und deren Ethylenoxidgehalt von 20 bis 60 Gew.-% beträgt. Mit diesen hier beschriebenen Stabilisatoren erhält man jedoch nach der CO₂ -Schäumtechnik keine lunkerfreien und homogenen Hartschaumstoffe.

Der vorliegenden Erfindung lag deshalb die Aufgabe zugrunde, Schaumstoffe auf Isocyanatbasis, insbesondere PUR-Hartschaumstoffe, mit homogenen, feinen und lunkerfreien Zellstrukturen bei Einsatz der CO₂ -Schäumtechnik mit Hilfe geeigneter Rohstofformulierungen zu erzeugen.

Diese Aufgabe konnte überraschenderweise dadurch gelöst werden, daß als Schaumstabilisator siliziumorganische Verbindungen mit einem relativen Gewichtsverhältnis Ethylenoxid/Propylenoxid von über 70/30 eingesetzt werden, wobei der Gesamt-Si-Gehalt größer oder gleich 5 Gew.-% beträgt.

Gegenstand der Erfindung ist demzufolge ein Verfahren zur Herstellung von Hartschaumstoffen auf Isocyanatbasis durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Kohlendioxid als alleiniges oder zusätzliches Treibmittel,
e) Schaumstabilisatoren,
f) Katalysatoren sowie gegebenenfalls
g) weiteren Hilfsmitteln und/oder Zusatzstoffen,
das dadurch gekennzeichnet ist, daß, als Schaumstabilisator mindestens eine siliziumorganische Verbindung mit einem relativen Gewichtsverhältnis Ethylenoxid/Propylenoxid von über 70/30 eingesetzt wird, wobei der Gesamt-Si-Gehalt größer oder gleich 5 Gew.-%, bezogen auf das Gewicht des bzw. der eingesetzten Schaumstabilisatoren, beträgt.

Gegenstand der Erfindung ist weiterhin die Verwendung der so hergestellten Hartschaumstoffe auf Isocyanatbasis als Isolier- und Dämmaterial.

Erfindungsgemäß wird als Schaumstabilisator mindestens eine siliziumorganische Verbindung mit einem relativen Gewichtsverhältnis Ethylenoxid/Propylenoxid von über 70/30 eingesetzt. Vorzugsweise beträgt das Ethylenoxid/Propylenoxid-Verhältnis über 90/10, besonders bevorzugt 100/0. Das heißt in letzterem Fall, daß kein Propylenoxid verwendet wird.

Der Gesamt-Si-Gehalt des Schaumstabilisators beträgt größer oder gleich 5 Gew.-%, vorzugsweise größer oder gleich 10 Gew.-%. Vorzugsweise werden als siliziumhaltige Schaumstabilisatoren für die erfindungsgemäße Herstellung von Hartschaumstoffen auf Isocyanatbasis Verbindungen der allgemeinen Strukturformel 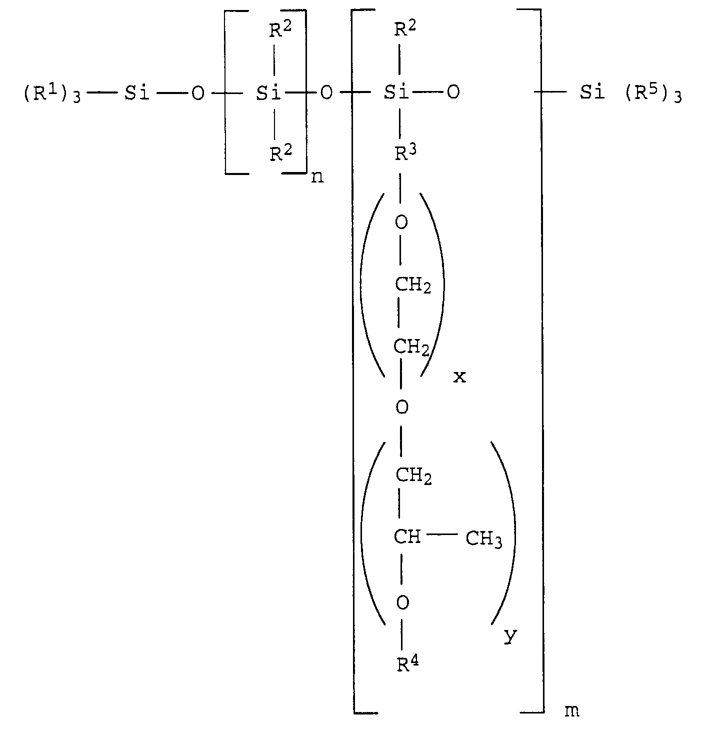 eingesetzt. Dabei bedeuten R¹, R², R⁴ und R⁵ lineare oder verzweigte Alkylreste mit 1 bis 3 C-Atomen und R³ (CH₂)ₚ mit p = 1, 2, 3, 4, 5 oder 6. Das Verhältnis von x zu y ist größer als 70/30 und der Gesamt-Si-Gehalt beträgt größer oder gleich 5 Gew.-%.

In einer besonders vorteilhaften Ausführungsform werden die auf dem Markt verfügbaren siliziumhaltigen Schaumstabilisatoren der Firmen Goldschmidt, beispielsweise Tegostab B 8423 oder Tegostab B 8466, und Airproducts, beispielsweise Dabco® DC 5103, Dabco® DC 5357 oder Dabco® OS 340, einzeln oder im Gemisch, eingesetzt.

Es können eine oder mehrere siliziumorganische Verbindungen im Gemisch als Schaumstabilisatoren eingesetzt werden. Neben siliziumorganischen Verbindungen können auch weitere in der PUR-Chemie übliche Schaumstabilisatoren, wie sie weiter unten beispielsweise aufgeführt sind, mitverwendet werden. Werden weitere in der PUR-Chemie übliche Schaumstabilisatoren mitverwendet, so muß erfindungsgemäß der Si-Gehalt des gesamten Schaumstabilisatorengemisches in den oben beschriebenen Grenzen liegen, um das angestrebte Ergebnis zu erreichen.

Die gegebenenfalls eingesetzten weiteren Schaumstabilisatoren werden höchstens in einer Menge von 0,5 bis 3 Gew.-%, bezogen auf das Gesamtgewicht der Komponenten (b), (f) sowie gegebenenfalls (c) und (g), verwendet.

Die Herstellung der Hartschaumstoffe auf Isocyanatbasis erfolgt durch Umsetzung in an sich bekannter Weise von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Kohlendioxid als alleiniges oder zusätzliches Treibmittel,
e) Schaumstabilisatoren,
f) Katalysatoren sowie gegebenenfalls
g) weiteren Hilfsmitteln und/oder Zusatzstoffen.

Zur Herstellung der Hartschaumstoffe auf Isocyanatbasis nach dem erfindungsgemäßen Verfahren finden, mit Ausnahme der Schaumstabilisatoren (e), die in der PUR-Chemie üblichen Einsatzstoffe Verwendung, zu denen beispielhaft folgendes ausgeführt wird:

Als organische und/oder modifizierte organische Di- und/oder Polyisocyanate (a) kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylen-diisocyanat-1,4 und vorzugsweise Hexamethylendiisocyanat-1,6, cycloaliphatische Diisocyanate, wie Cyclohexan-1,3- und -1,4-diisocyanat, sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische und vorzugsweise aromatische Di- und Polyisocyanate, wie z.B. 2,4- und 2,6-Toluylendiisocyanat (-TDI) und die entsprechenden Isomerengemische, 4,4'-, 2,4'- und 2,2'-Diphenylmethandiisocyanat (-MDI) und die entsprechenden Isomerengemische , Mischungen aus 4,4' - und 2,2'-MDI, Polyphenylpolymethylenpolyisocyanate, Mischungen aus 4,4'-, 2,4'- und 2,2'-MDI und Polyphenylpolymethylenpolyisocyanaten (Roh-MDI) und Mischungen aus Roh-MDI und TDI. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Isocyanurat- und vorzugsweise Carbodiimid-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-MDI, modifizierte 4,4'- und 2,4'-MDI-Mischungen oder modifiziertes Roh-MDI oder 2,4- bzw. 2,6-TDI, wobei als Di- bzw. Polyoxyalkylenglykole, die einzeln oder als Gemische eingesetzt werden können, beispielhaft genannt seien: Diethylen-, Dipropylenglykol, Polyoxyethylen-, Polyoxypropylen- und Polyoxypropylenpolyoxyethenglykole, -triole und/oder -tetrole. Geeignet sind auch Urethangruppen enthaltende Prepolymere mit einem NCO-Gehalt von 25 bis 3,5 Gew.-%, vorzugsweise von 21 bis 14 Gew.-%, oder Quasiprepolymere mit einem NCO-Gehalt von 35 bis 14 Gew.-%, vorzugsweise von 34 bis 22 Gew.-%, bezogen auf das Gesamtgewicht, hergestellt werden durch Umsetzung von Diolen, Oxalkylenglykolen und/oder Polyoxyalkylenglykolen mit Molekulargewichten von 62 bis 6000, vorzugsweise von den nachfolgend beschriebenen Polyether- und/oder polyesterpolyolen, mit TDI, 4,4'-MDI, MDI-Isomerengemischen und/oder Roh-MDI, z.B. bei Temperaturen von 20 bis 110°C, vorzugsweise von 50 bis 90°C. Bewährt haben sich ferner flüssige Carbodiimidgruppen und/oder Isocyanuratringe enthaltende Polyisocyanate, mit NCO-Gehalten von 33,6 bis 15 Gew.-%, vorzugsweise von 31 bis 21 Gew.-%, bezogen auf das Gesamtgewicht, z.B. auf MDI-Isomeren- und/oder TDI-Basis.

Die modifizierten Polyisocyanate können miteinander oder mit unmodifizierten organischen Polyisocyanaten, wie z.B. 2,4'-, 4,4'-MDI, Roh-MDI, 2,4- und/oder 2,6-TDI, gemischt werden.

Besonders bewährt haben sich als organische Polyisocyanate und kommen daher vorzugsweise zur Anwendung: TDI, MDI, Roh-MDI und deren Mischungen oder Mischungen aus modifizierten Urethangruppen enthaltenden organischen Polyisocyanaten mit einem NCO-Gehalt von 33,6 bis 15 Gew.-%, insbesondere solche auf Basis von TDI, 4,4'-MDI, MDI-Isomerengemischen oder Roh-MDI und insbesondere Roh-MDI mit einem MDI-Isomerengehalt von 30 bis 80 Gew.%, vorzugsweise von 30 bis 55 Gew.-%.

Als höhermolekulare Verbindungen mit mindestens zwei reaktiven Wasserstoffatomen (b) kommen Verbindungen in Frage, die zwei oder mehrere reaktive Gruppen, ausgewählt aus OH-Gruppen, SH-Gruppen, NH-Gruppen NH₂-Gruppen und CH-aciden Gruppen, wie z.B. β-Diketo-Gruppen, im Molekül tragen. Zweckmäßigerweise werden solche mit einer Funktionalität von 2 bis 8, vorzugsweise 2 bis 6, und einem Molekulargewicht von 300 bis 8000, vorzugsweise von 400 bis 4000, verwendet.

Bewährt haben sich z. B. Polyetherpolyamine und/oder vorzugsweise Polyole, ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonaten oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 100 bis 850 und vorzugsweise 200 bis 600.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride, eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen und insbesondere Adipinsäure. Beispiele für zwei- und mehrwertige Alkohole, insbesondere Diole, sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton, oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert. Die erhaltenen Polyesterpolyole besitzen vorzugsweise eine Funktionalität von 2 bis 4, insbesondere 2 bis 3, und ein Molekulargewicht von 300 bis 3000, insbesondere 400 bis 600.

Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewissäuren, wie Antimonpentachlorid, Borfluorid-Etherat u.a., oder Bleicherde, als Katalysatoren aus einem oder mehreren Alkylenoxiden mit 2 bis 4 Kohlenstoffatomen im Alkylenrest hergestellt werden. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono- N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole, vorzugsweise Polyoxypropylen- und Polyoxypropylenpoly-oxyethylenpolyole, besitzen eine Funktionalität von vorzugsweise 2 bis 6 und insbesondere 2 bis 4 und Molekulargewichte von 300 bis 8000, vorzugsweise 400 bis 6000 und insbesondere 1000 bis 5000, und geeignete Polyoxytetramethylenglykole ein Molekulargewicht bis ungefähr 3500.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 1111394, 1222669 (US-A-3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tertiäre Aminogruppen gebunden enthaltende Polyurethane und/oder Melamin und die z.B. beschrieben werden in EP-B-011752 (US-A-4304708), US-A-4374209 und DE-A-3231497.

Die Polyetherpolyole können ebenso wie die Polyesterpolyole einzeln oder in Form von Mischungen verwendet werden. Ferner können sie mit den Pfropfpolyether-polyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol und Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Hartschaumstoffe auf Isocyanatbasis können ohne oder unter Mitverwendung von Kettenverlängerungs- und/oder Vernetzungsmitteln (c) hergestellt werden. Zur Modifizierung der mechanischen Eigenschaften, z. B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Wasser sowie Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen und/oder Pentaerythrit, Sorbit und Saccharose als Startermoleküle.

Die Kettenverlängerungsmittel, Vernetzungsmittel oder Mischungen davon kommen zweckmäßigerweise in einer Menge von 0 bis 20 Gew.-%, vorzugsweise von 2 bis 8 Gew.-%, bezogen auf das Gewicht der Komponente (b), zum Einsatz.

Als Treibmittel (d) wird erfindungsgemäß, allein oder als zusätzliches Treibmittel, Kohlendioxid eingesetzt. Das physikalische Dosieren und das Beladen der Komponenten mit CO₂ erfolgt in bekannter Art und Weise. Ausführungen dazu sind in einschlägigen Fachzeitschriften, beispielsweise in "Kunststoffe" 6/97, Seiten 722-727 (H. Klahre u. a.: PUR-Schaumstoffe mit homogener Zellstruktur) und "Plastverarbeiter" 7/97, Seiten 46/47 (Perfekt geschäumt), nachzulesen. Zum CO₂-Eintrag werden weiter unten einige Ausführungen gemacht.

Neben CO₂ können weitere, aus der Polyurethanchemie allgemein bekannte Treibmittel eingesetzt werden.

Neben Fluorchlorkohlenwasserstoffen (FCKW), deren Einsatz aus ökologischen Gründen stark eingeschränkt bzw. ganz eingestellt wird, bieten sich insbesondere aliphatische und/oder cycloaliphatische Kohlenwasserstoffe mit bis zu 12 Kohlenstoffatomen, insbesondere Butane, Pentane und Cyclopentan, niedere monofunktionelle Alkohole, Acetale, wie z. B. Methylal, oder auch teilhalogenierte Kohlenwasserstoffe (HFCKW) als Alternativtreibmittel an. Weiterhin ist es vorteilhaft, als Co-Treibmittel Perfluorverbindungen, wie Perfluoralkane, vorzugsweise n-Perfluorpentan, n-Perfluorhexan, n-Perfluorheptan und n-Perfluoroctan, einzusetzen. Die hoch- und/oder perfluorierten Kohlenwasserstoffe werden üblicherweise in der Polyolkomponente emulgiert. Als Emulgatoren, sofern sie Anwendung finden, werden beispielsweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt.

Die physikalischen Treibmittel können einzeln oder in beliebigen Mischungen miteinander, als reine Isomere oder als Isomerengemische verwendet werden. Sie werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden.

Die eingesetzte Menge des Treibmittels bzw. der Treibmittelmischung liegt dabei bei 1 bis 25 Gew.-% vorzugsweise 1 bis 20 Gew.-%, jeweils bezogen auf die Komponenten (b) bis (g).

Weiterhin ist es möglich und üblich, als Treibmittel Wasser in einer Menge von 0,5 bis 15 Gew.-%, vorzugsweise 1 bis 5 Gew.-%, bezogen auf die Aufbaukomponenten (b) bis (g), zuzusetzen, wobei die treibende Wirkung des durch die Isocyanat-Wasser-Reaktion erzeugten CO₂ genutzt wird. Der Wasserzusatz kann in Kombination mit dem Einsatz der anderen beschriebenen Treibmittel erfolgen.

Als Schaumstabilisatoren (e) werden erfindungsgemäß die oben beschriebenen siliziumorganischen Verbindungen, gegebenenfalls im Gemisch mit weiteren in der PUR-Chemie übliche Schaumstabilisatoren, eingesetzt. Einzelheiten zu gegebenenfalls weiteren einsetzbaren Schaumstabilisatoren sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, sowie dem weiter oben zitierten Kunststoff-Handbuch, Band VII, "Polyurethane", zu entnehmen.

Als Katalysatoren (f) zur Herstellung von Schaumstoffen auf Isocyanatbasis werden insbesondere Verbindungen verwendet, die die Reaktion der reaktiven Wasserstoffatome, insbesondere hydroxylgruppenenthaltender Verbindungen der Komponenten (b), (c) und (e), mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Alkanolaminverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl )-s-hexahydrotriazin, Tetraalkylammoniumhydroxide, wie Tetramethylammoniumhydroxid, Alkalihydroxid, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 3 Gew.-% Katalysator bzw. Katalysatorkombination, bezogen auf das Gewicht der Aufbaukomponenten (b) bis (g).

Der Reaktionsmischung zur Herstellung der Polyurethanschaumstoffe können gegebenenfalls noch weitere Hilfsmittel und/oder Zusatzstoffe (g) einverleibt werden. Genannt seien beispielsweise Flammschutzmittel, oberflächenaktive Substanzen, Zellregler, Füllstoffe, Farbstoffe, Pigmente, Hydrolyseschutzmittel, fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)phosphat, Tetrakis-(2-chlorethyl)-ethylendi-phosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im allgemeinen hat es sich als zweckmäßig erwiesen, 5 bis 60 Gew.-Teile, vorzugsweise 10 bis 50 Gew.-Teile, der genannten Flammschutzmittel für jeweils 100 Gew.-Teile der Aufbaukomponenten (b) bis (g) zu verwenden.

Nähere Angaben über oben genannte und weitere Ausgangsstoffe sind der weiter oben zitierten Fachliteratur zu entnehmen.

Zur Herstellung der Hartschaumstoffe auf Isocyanatbasis werden die Komponenten (a) bis (g) in solchen Mengen zur Umsetzung gebracht, daß das Äquivalenzverhältnis der NCO-Gruppen der Komponente (a) zur Summe der reaktiven Wasserstoffatome der Komponenten (b), (e), (f) und gegebenenfalls (c) und (g) 0,85 bis 1,75:1, vorzugsweise 1,0 bis 1,3:1, beträgt. Falls die Hartschaumstoffe auf Isocyanatbasis zumindest teilweise Isocyanuratgruppen gebunden enthalten, wird üblicherweise ein Verhältnis der genannten Komponenten von 1,5 bis 60:1, vorzugsweise 3 bis 8:1 angewandt.

Die Hartschaumstoffe auf Isocyanatbasis nach dem erfindungsgemäßen Verfahren werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch das kontinuierliche Auftragen des Reaktionsgemisches auf geeigneten Bandstraßen zur Erzeugung von Schaumblöcken.

Als besonders vorteilhaft hat es sich erwiesen, nach dem Zweikomponentenverfahren zu arbeiten und die Aufbaukomponenten (b), (c), (d), (e), (f) und gegebenenfalls (g) zu einer sogenannten Polyolkomponente, auch als Komponente A bezeichnet, zu vereinigen und als Isocyanatkomponente, auch als Komponente B bezeichnet, die Aufbaukomponente (a) und gegebenenfalls Treibmittel (d) zu verwenden. Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht. Die Vermischung kann beispielsweise mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

Das Einbringen von CO₂ als Treibmittel zum Verschäumen erfolgt in bekannter Art und Weise. Insbesondere bewährt haben sich die folgenden 2 Verfahrenswege:
1. Beladung der Polyolkomponente mit CO₂-Gas bei Drücken von 4 bis 15 bar, vorzugsweise 6 bis 10 bar, auf einen CO₂-Gehalt, welcher unter der Froth-Grenze des Reaktionsgemisches liegt und in Abhängigkeit von der Rohstoffzusammensetzung der Komponenten für das jeweilige System zu ermitteln ist. Nach dem Beladen wird die Polyolkomponente in einem Mischkopf mit der Isocyanatkomponente vermischt und in die Form oder auf ein Band zum Schäumen gebracht.
2. CO₂-Flüssig wird in der - wie oben beschrieben - ermittelten Menge als zusätzliche Komponente entweder über eine Düse direkt in den Mischkopf zu den Hauptkomponenten dosiert oder über ein Dosieraggregat unmittelbar vor dem Mischkopf in einen Statikmischer eingebracht und in der Polyolkomponente homogenisiert, die danach in den Mischkopf geleitet wird.

Die nach dem erfindungsgemäßen Verfahren hergestellten PUR-Hartschaumstoffe weisen eine Dichte von 0,02 bis 0,75 g/cm³, vorzugsweise von 0,025 bis 0,24 g/cm³ und insbesondere von 0,03 bis 0,1 g/cm³, auf. Besonders eignen sie sich als Isoliermaterial für Kühlmöbel, im Bauwesen für die Dämmung von Kühlhäusern, Lagerhallen, Fernwärmerohren, Containern und ähnlichem.

Die vorliegende Erfindung soll anhand der angeführten Beispiele näher erläutert werden.

### Beispiel 1 (Vergleich)

In der Hartschaumformulierung wurde der Stabilisator Tegostab B 8863 (Goldschmidt) mit einem Ethylenoxid/Propylenoxid -Verhältnis von 44/56 Gew.-%, einem Si-Gehalt von 3 Gew.-%, bezogen auf das Gewicht des eingesetzten Stabilisators, und einer Hydroxylzahl von 34 mg KOH/g eingesetzt:

### A-Komponente:

- 55,5 Gew.-%: einer Polyhydroxylverbindung, hergestellt aus Saccharose, Glycerin und Propylenoxid, mit einer Hydroxylzahl von 423 mg KOH/g,
- 20,0 Gew.-%: eines Br-, Cl- und P-haltigen Flammschutzmittelgemisches mit einem Br-Gehalt von 34 Gew.-%, einem Cl-Gehalt von 11 Gew.-% und einem P-Gehalt von 3 Gew.-% und mit einer Hydroxylzahl von 210 mg KOH/g,
- 20,0 Gew.-%: Trischlorpropylphosphat,
- 1,0 Gew.-%: Tris-(dimethylaminopropyl)-s-hexahydrotriazin,
- 0,5 Gew.-%: Triethylamin (TEA),
- 2,0 Gew.-%: Wasser und
- 1,0 Gew.-%: Si-Stabilisator Tegostab B 8863 (Goldschmidt)

### B-Komponente:

Polyisocyanat Lupranat® M 50 (BASF), ein Gemisch aus Diphenylmethandiisocyanat und Polyphenylpolyisocyanaten mit einem NCO-Gehalt von 31,5 Gew.-% und einer Viskosität von 550 mPas bei 25°C.

### Mischungsverhältnis:

- Komponente A: 100 Gew.-Teile
- Komponente B: 117 Gew.-Teile

Ergebnisse nach Maschinenverschäumung mit CO₂-Gas und CO₂-Flüssig (nach beiden Verfahren ergeben sich analoge Ergebnisse):

| | | | |
|---|---|---|---|
| CO₂-Zusatz, Gew.-% auf Komp. A | 0 | 0,8 | 1,2 |
| Rohdichte, g/l | 62 | 52 | 50 |
| Wärmeleitfähigkeit, mW/m^{o}K | 23,9 | 23,3 | nicht meßbar* |
| Zellgröße, µm | 190/250** | 190/290 | nicht meßbar* |
| Anzahl der Lunker in 400 cm² | 0 | 10 | 57 |

| | | | |
|---|---|---|---|
| * wegen inhomogener Zellstruktur und großen Lunkern keine Messung | | | |
| ** quer / längs zur Schäumrichtung | | | |

Der Schaum wies nach beiden CO₂-Verfahren mit zunehmendem CO₂-Zusatz eine zunehmend schlechtere Homogenität und lunkerige Zellstruktur auf. Der Hartschaum war nicht verwertbar.

### Beispiel 2

Im Beispiel 2 wurden die gleichen Rohstoffe mit dem gleichen Mischungsverhältnis wie im Beispiel 1 eingesetzt, jedoch wurde anstatt des Stabilisators Tegostab B 8863 eine Mischung an Stabilisatoren Tegostab B 8466 (Goldschmidt) und Dabco® OS 340 (Air Products) zu je 0,5 Gew.-% eingesetzt. Das EO/PO-Verhältnis der Stabilisatormischung betrug 81/19 %, der Si-Gehalt 7 Gew.-%, bezogen auf das Gewicht des eingesetzten Stabilisatorgemisches, und die Hydroxylzahl 65 mg KOH/g.

Ergebnisse nach Maschinenverschäumung mit CO₂-Gas und CO₂-Flüssig:

| | | | |
|---|---|---|---|
| CO₂-Zusatz, Gew.-% auf Komp. A | 0 | 0,8 | 1,2 |
| Rohdichte, g/l | 61 | 52 | 50 |
| Wärmeleitfähigkeit, mW/m^{o}K | 23,3 | 23,3 | 23,7 |
| Zellgröße, µm | 180/240 | 190/250 | 220/260 |
| Anzahl der Lunker in 400 cm² | 0 | 2 | 20 |

Der Hartschaum war feinzelliger und wies weniger Lunker auf als im Beispiel 1.

### Beispiel 3

Im Beispiel 3 wurden ebenfalls die gleichen Rohstoffe mit dem gleichen Mischungsverhältnis wie im Beispiel 1 verwendet, jedoch wurde anstatt des Stabilisators Tegostab B 8863 der Stabilisator Dabco® DC 5357 (Air Products) von 1,0 Gew.-%, eingesetzt. Das EO/PO-Verhältnis betrug 100/0 %, der Si-Gehalt 16 Gew.-%, bezogen auf das Gewicht des eingesetzten Stabilisators, und die Hydroxylzahl 50 mg KOH/g.

Ergebnisse nach Maschinenverschäumung mit CO₂-Gas und CO₂-Flüssig:

| | | | |
|---|---|---|---|
| CO₂-Zusatz, Gew.-% auf Komp. A | 0 | 0,8 | 1,2 |
| Rohdichte, g/l | 62 | 52 | 51 |
| Wärmeleitfähigkeit, mW/m^{o}K | 23,3 | 23,0 | 23,2 |
| Zellgröße, µm | 160/170 | 180/200 | 180/230 |
| Anzahl der Lunker in 400 cm² | 0 | 0 | 0 |

Der Hartschaum war feinzellig und ergab nach CO₂-Zusatz weiterhin eine homogene Zellstruktur. Trotz des Froth-Effektes bei 1,2% CO₂ kam es nicht zu Lunkern im Schaum.

### Beispiel 4

Im folgenden Beispiel wird ein Hartschaumformulierung mit Cyclopentan als zusätzlichem Treibmittel aufgeführt. Als Stabilisator wurde eine Mischung aus Tegostab B 8423 und Dabco® DC 5103 mit einem EO/PO-Gewichtsverhältnis von 74/26, einem Si-Gehalt von 8 Gew.-% und einer Hydroxylzahl von 91 mg KOH/g eingesetzt:

### A-Komponente:

- 54,0 Gew.-%: einer Polyhydroxylverbindung, hergestellt aus Sorbit und Propylenoxid, mit einer Hydroxylzahl von 490 mg KOH/g,
- 28,0 Gew.-%: einer Polyhydroxylverbindung, hergestellt aus Saccharose und Diethylenglykol, mit einer Hydroxylzahl von 400 mg KOH/g,
- 5,3 Gew.-%: Dipropylenglykol,
- 1,9 Gew.-%: Glycerin,
- 2,1 Gew.-%: eines Katalysatorgemisches aus Dimethylcyclohexylamin und Pentamethyldiethylentriamin,
- 0,8 Gew.-%: Wasser,
- 0,9 Gew.-%: Si-Stabilisator Tegostab B 8423,
- 0,5 Gew.-%: Si-Stabilisator Dabco® DC5103 und
- 6,5 Gew.-%: Cyclopentan

### B-Komponente:

Polyisocyanat Lupranat® M 20 (BASF), ein Gemisch aus Diphenylmethandiisocyanat und Polyphenylpolyisocyanaten mit einem NCO-Gehalt von 31,5% und einer Viskosität von 220 mPas bei 25°C.

### Mischungsverhältnis:

- Komponente A: 100 Gew.-Teile
- Komponente B: 143 Gew.-Teile

Ergebnisse nach Maschinenverschäumung mit CO₂-Flüssig:

| | | | |
|---|---|---|---|
| CO₂-Zusatz, Gew.-% auf Komp. A | 0 | 0,6 | 1,2 |
| Rohdichte, g/l | 57,5 | 51 | 49,5 |
| Wärmeleitfähigkeit, mW/m^{o}K | 21,2 | 21,4 | 21,6 |
| Zellgröße, µm | 307/320** | 270/290 | 290/330 |
| Anzahl der Lunker in 400 cm² | 0 | 5 | 10 |

| | | | |
|---|---|---|---|
| ** quer/längs zur Schäumrichtung | | | |

Der Schaum wies mit zunehmendem CO₂-Zusatz feinere Zellstruktur auf. Die Lunkerbildung war deutlich geringer als im Beispiel 1.

### Beispiel 5

Im Beispiel 5 wurden die gleichen Rohstoffe mit dem gleichen Mischungsverhältnis wie im Beispiel 4 eingesetzt, jedoch wurde anstatt der Stabilisatormischung der Stabilisator Dabco® DC 5357 (Airproducts) verwendet. Damit wurde der Si-Gehalt des Stabilisators auf Basis 100 Gew.-% EO auf 16 Gew.-% erhöht.

Ergebnisse nach Maschinenverschäumung mit CO₂-Flüssig:

| | | | |
|---|---|---|---|
| CO₂-Zusatz, Gew.-% auf Komp. A | 0 | 0,6 | 1,2 |
| Rohdichte, g/l | 57,5 | 51 | 49 |
| Wärmeleitfähigkeit, mW/m^{o}K | 20,8 | 21,0 | 21,2 |
| Zellgröße, µm | 190/220 | 240/260 | 270/310 |
| Anzahl der Lunker in 400 cm² | 0 | 1 | 5 |

Der Hartschaum war feinzelliger und wies weniger Lunker auf als der im Beispiel 4.

## Patentansprüche

1. Verfahren zur Herstellung von Hartschaumstoffen auf Isocyanatbasis durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Kohlendioxid als alleiniges oder zusätzliches Treibmittel,
e) Schaumstabilisatoren,
f) Katalysatoren sowie gegebenenfalls
g) weiteren Hilfsmitteln und/oder Zusatzstoffen,
dadurch gekennzeichnet, daß als Schaumstabilisator mindestens eine siliziumorganische Verbindung mit einem relativen Gewichtsverhältnis Ethylenoxid/Propylenoxid von über 70/30 eingesetzt wird, wobei der Gesamt-Si-Gehalt größer oder gleich 5 Gew.-%, bezogen auf das Gewicht des bzw. der eingesetzten Schaumstabilisatoren, beträgt.

2. Verfahren nach Anspruch 1, dadurch gekennzeichnet, daß als Schaumstabilisator mindestens eine Verbindung der allgemeinen Strukturformel 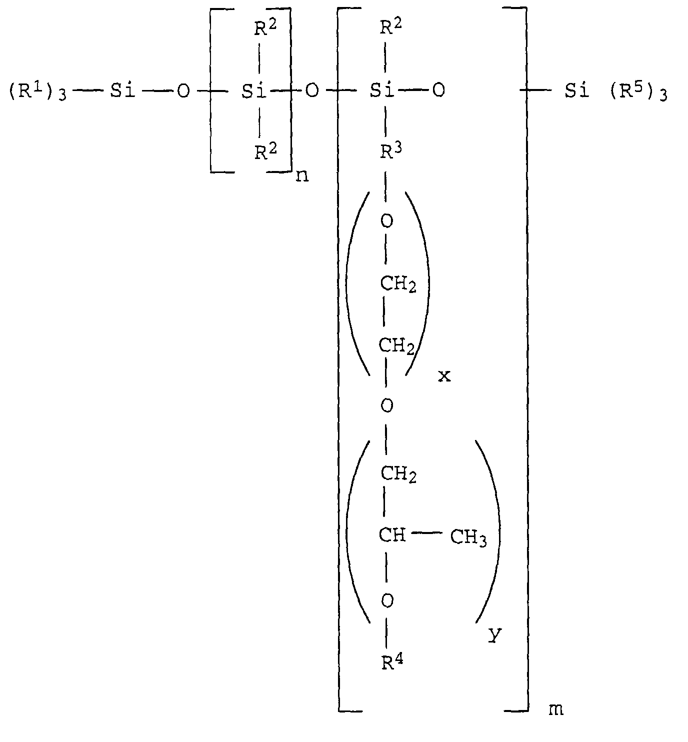 eingesetzt wird, wobei R¹, R², R⁴ und R⁵ lineare oder verzweigte Alkylreste mit 1 bis 3 C-Atomen und R³ (CH₂)ₚ mit p = 1, 2, 3, 4, 5 oder 6 bedeuten, das Verhältnis von x zu y größer als 70/30 ist und der Gesamt-Si-Gehalt größer oder gleich 5 Gew.-% beträgt.

3. Verfahren nach Anspruch 1 oder 2, dadurch gekennzeichnet, daß der Schaumstabilisator in einer Menge von 0,5 bis 3 Gew.-%, bezogen auf das Gesamtgewicht der Komponenten b), d), e), f) sowie gegebenenfalls c) und g) eingesetzt wird.

4. Verwendung der gemäß der Ansprüche 1 bis 3 hergestellten Hartschaumstoffe auf Isocyanatbasis als Isolier- und Dämmaterial.
